# DEMANDE DE BREVET EUROPEEN

(11) **EP 0 818 834 A1**
(43) Date de publication de la demande: **14.01.1998**
(21) Numéro de dépôt: 97202108.3
(22) Date de dépôt: 08.07.1997
(51) Int. Cl.: H01M 2/02, H01M 10/12, H01M 10/04, H01M 2/06

(54) **Elément accumulateur plat incluant une cellule électrochimique sous pression, un assemblage de tels éléments accumulateurs et une carte mince incluant un tel élément accumulateur plat**

(30) Priorité: 10.07.1996 FR 9608622
(71) Demandeur: PHILIPS ELECTRONICS N.V., 5621 BA Eindhoven (NL)
(72) Inventeur: van Lerberghe, Steven, 75008 Paris (FR)
(74) Mandataire: Lottin, Claudine

(57) **Abrégé**

L'invention concerne un élément accumulateur (1) plat comprenant une cellule élémentaire électrochimique (100) ayant des électrodes planes (16,18) munies de zones de contact (26,28) et un électrolyte sous pression dans une enveloppe (40) qui a des parois planes (40A,40B) et des zones de fermeture étanche périphériques (41,42) avec des passages étanches pour lesdites zones de contact (26,28). Cet élément accumulateur comprend aussi moyens de contact d'entrée/sortir appliqués sur des languettes métalliques (36,38) sont respectivement connectées aux zones de contact (26,28) des électrodes (16,18) dans une zone de fermeture étanche (42A) de l'enveloppe (40). dans une mise en oeuvre, ces languettes sont recourbées avec leurs extrémités dirigées vers les centres des parois planes (40A, 40B) à l'extérieur de l'enveloppe, et sont pressées contre ces parois par des moyens de pression externes (50,52 ; 80,82) pour maintenir l'électrolyte à une pression, qui constituent lesdits moyens de contact d'entrée/sortie.

L'invention concerne aussi un assemblage d'éléments et une carte mince (2) incluant un tel élément accumulateur.

Application : Batteries pour appareils sans fil

## Description

La présente invention concerne un élément accumulateur plat comprenant une cellule élémentaire électrochimique incluant des électrodes planes de polarités opposées munies respectivement de zones de contact et un électrolyte sous pression, et une enveloppe pour contenir la cellule électrochimique.

L'invention concerne également un assemblage de tels éléments accumulateurs et une carte mince incluant un tel élément accumulateur plat.

L'invention trouve son application dans l'industrie de fabrication des appareils portables et particulièrement dans l'industrie de fabrication des terminaux téléphoniques sans fil.

Une enveloppe pour un élément accumulateur plat est déjà connue de la demande de brevet EP 0176597 du 29 mars 1984 (SEALED BATTERY)". Ce document décrit un élément accumulateur plat ayant des électrodes et un électrolyte enfermés dans une enveloppe. Les électrodes ont des zones de contact pour leur connexion avec des plots de contact externes, et à cet effet s'étendent à travers une zone de scellement étanche de la poche, et dépassent à l'extérieur de l'enveloppe. L'enveloppe est enfermée dans un boîtier formé de deux coques qui sont collées par leurs bords et assurent ainsi une pression sur les parois de l'enveloppe. Une des coques du boîtier porte des plots d'entrée/sortie disposées dans une partie non pressante. La connexion entre lesdits plots et les zones de contact des électrodes est faite directement, à l'extérieur de l'enveloppe tout en étant à l'intérieur du boîtier.

La présente invention a pour objet un élément accumulateur plat comprenant une cellule élémentaire électrochimique, par exemple du type plomb-acide.

Un problème technique réside dans le fait que, dans une cellule électrochimique plomb-acide, l'électrolyte, qui peut être l'acide sulfurique, doit être utilisé dans un état pratiquement saturé et sous une certaine pression interne supérieure à la pression atmosphérique, et que cette pression doit être maintenue dans la cellule dans son état normal opérationnel. Un autre problème technique est que les connexions électriques avec les zones de contact des électrodes doivent être faites en dehors de la poche pour éviter des possibles réactions chimiques entre le matériau des connexions et l'électrolyte. Un autre problème technique est que le matériau des zones de contact des électrodes qui sert à faire ces connexions devrait être très résistant mécaniquement, ce qui n'est généralement pas le cas.

Ces problèmes sont résolus par un élément accumulateur tel que décrit dans la revendication 1.

Un avantage est que le matériau des languettes peut être choisi de manière à renforcer la connexion entre les zones de contact et les moyens de contact électrique d'entrée/sortie.

Un problème technique réside aussi dans le fait qu'une seule cellule électrochimique ne fournit pas toujours la valeur de tension souhaitée. Ce problème est résolu par un assemblage selon la revendication 7.

Un problème technique réside aussi dans le fait que la demande de l'industrie est pour un tel accumulateur électrique, ayant des propriétés de rigidité augmentées pour une mise en place plus aisée dans un appareil sans fil et disposant de zones de contact électrique franc. Ce problème est résolu par une carte mince selon la revendication 9.

Un élément accumulateur, un assemblage d'éléments accumulateurs plats et une carte mince sont décrits ci-après en détail en référence avec les figures schématiques annexées.

Parmi les figures :

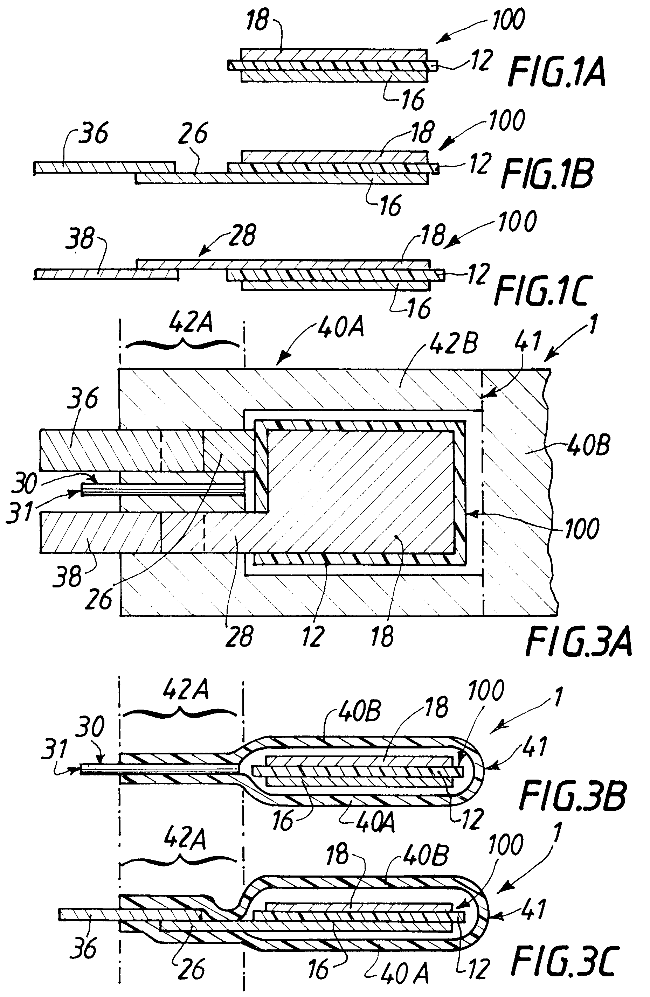

La FIG.1A représente une cellule électrochimique en coupe transversale simple ; les FIGs. 1B et 1C représentent cette cellule électrochimique en coupe transversale dans une zone de contact de la première électrode et de la deuxième électrode respectivement ;
La FIG.2 représente en coupe transversale simple une cellule électrochimique du type appelé plomb-acide dans un exemple de mise en oeuvre ;
La FIG.3A représente, vu du dessus, un élément accumulateur avec une enveloppe en une partie appelée type plié, avant scellement : les FIGs.3B et 3C représentent cet élément accumulateur après scellement des bords externes de l'enveloppe pliée, respectivement en coupe transversale selon un évent, et selon une zone de contact d'électrode ;

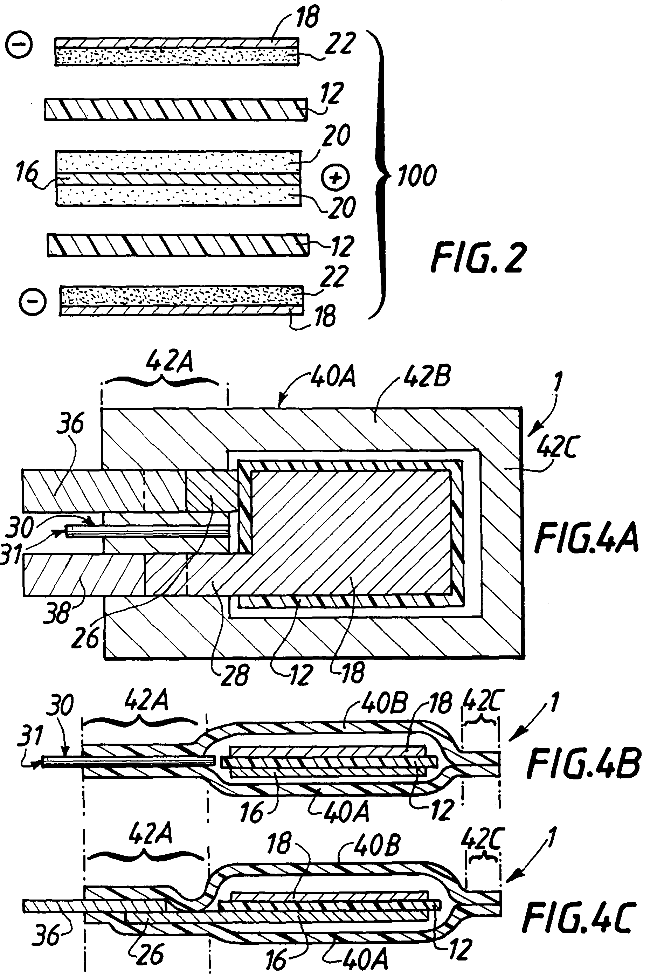

La FIG.4A représente, vu du dessus, un élément accumulateur avec une enveloppe en deux parties, appelée type pincé, avant scellement : les FIGs.4B et 4C représentent cet élément accumulateur après scellement des bords externes de l'enveloppe pincée, respectivement en coupe transversale selon un évent, et selon une zone de contact d'électrode ;

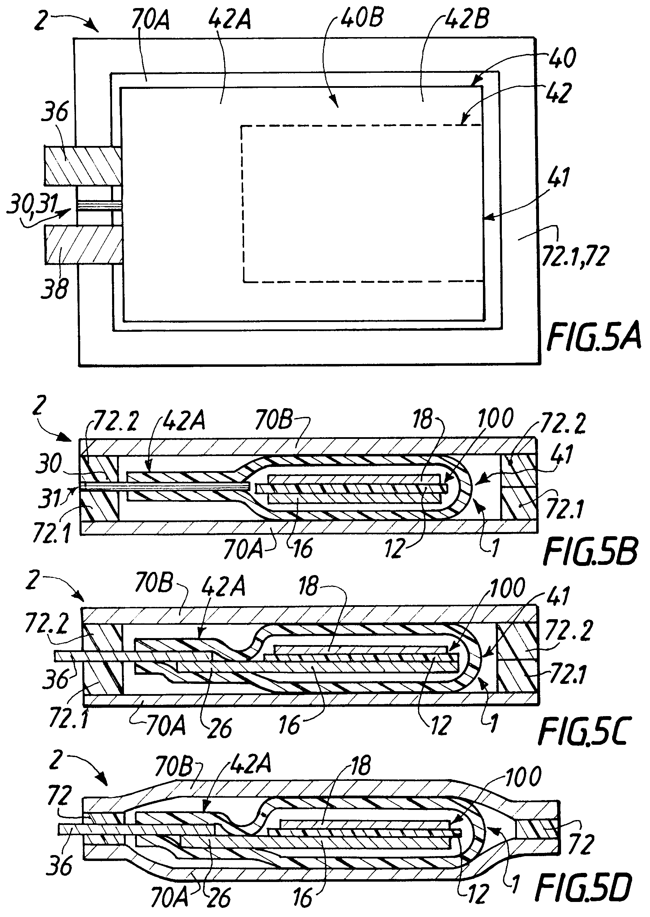

La FIG.5A représente, vue du dessus, une carte mince incluant un élément accumulateur à enveloppe pliée, vue du dessus avant scellement ; les FIGs 5B et 5C représentent cette carte mince après scellement au moyen de joints respectivement en coupe selon l'évent et en coupe selon une zone de contact ; la FIG.5D représente cette carte mince après scellement au moyen d'adhésif, en coupe selon une zone de contact ;

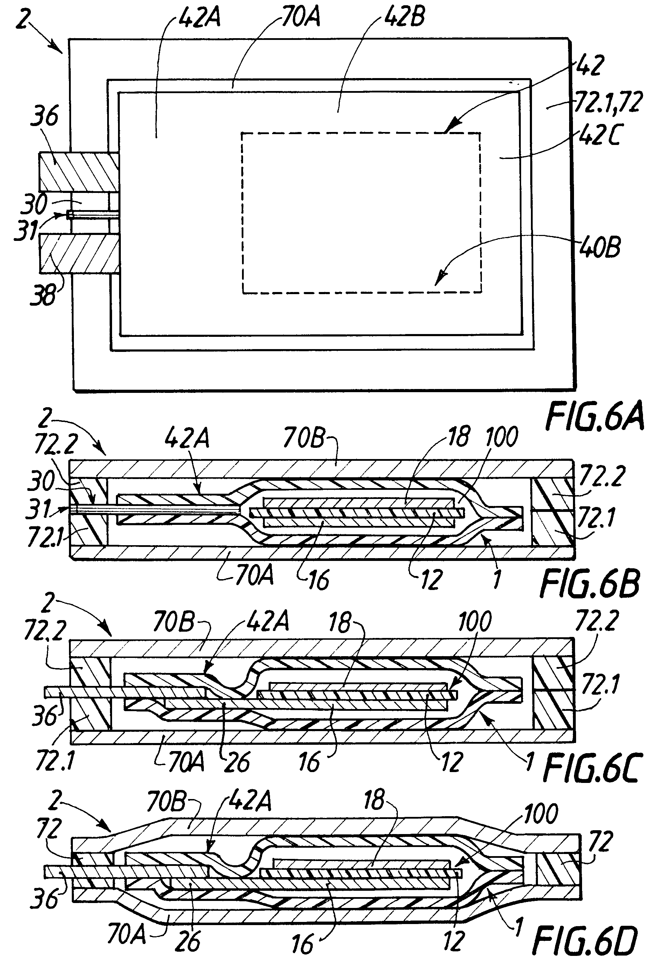

La FIG.6A représente, vue du dessus, une carte mince incluant un élément accumulateur à enveloppe pincée, vue du dessus avant scellement : les FIGs 6B et 6C représentent cette carte mince après scellement au moyen de joints respectivement en coupe selon l'évent et en coupe selon une zone de contact ; la FIG.6D représente cette carte mince après scellement au moyen d'adhésif, en coupe selon une zone de contact ;

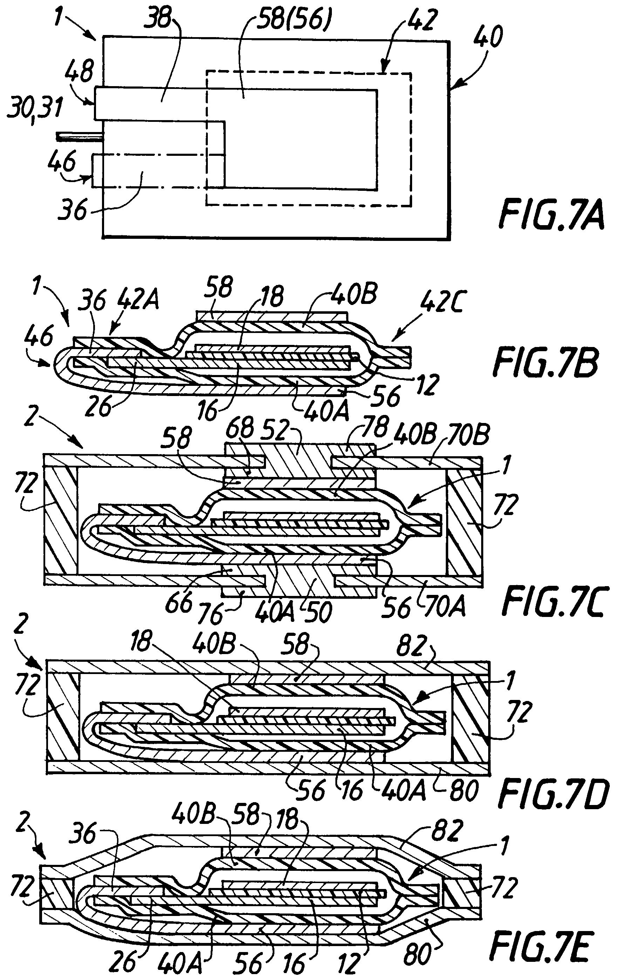

La FIG.7A représente, vu du dessus, un élément accumulateur, à enveloppe pincée, vu du dessus avec des languettes de contact repliées sur les parois de l'enveloppe et prolongées par des plots de contact ; la FIG.7B représente le même élément accumulateur en coupe selon une des languettes ; la FIG.7C représente en coupe une carte mince incluant cet élément accumulateur avec des pions de contact et de pression ; les FIG.7D et 7E représentent en coupe une carte mince incluant cet élément accumulateur, et ayant des parois conductrices, respectivement dans deux exemples de mise en oeuvre ;

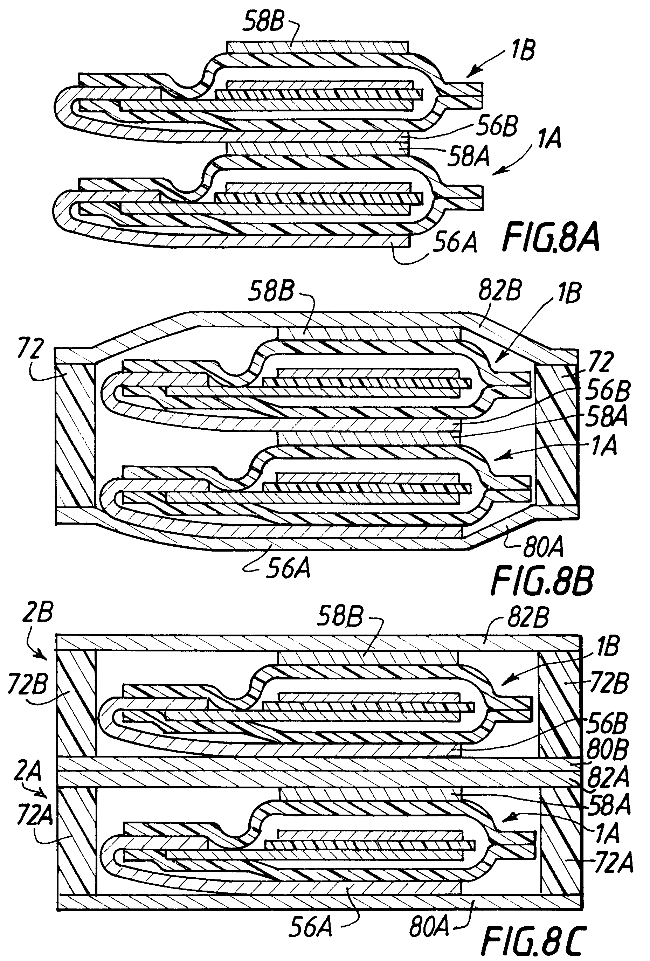

La FIG.8A représente deux éléments accumulateurs selon la FIG.7B montés en série ; la FIG.8B représente une carte mince incluant deux éléments accumulateurs montés en série selon la FIG.8A ; et la FIG.8C représente deux cartes minces selon la FIG.7D montées en série.

Les figures sont décrites ci-après en détail.

En référence avec les FIG.1A, 1B, 1C, une cellule 100 électrochimique élémentaire à électrolyte acide pour constituer un élément accumulateur 1 comprend vus en coupe transversale, deux films minces de matériau conducteur électrochimiquement actif formant des électrodes 16, 18 de polarités différentes et un film mince séparateur 12 imbibé d'électrolyte acide. En référence avec la FIG.1A, le séparateur 12 s'étend au delà des films formant les électrodes 16, 18. La cellule électrochimique 100 est ainsi d'un type mince et plat, ayant des films conducteurs pour former des électrodes substantiellement minces et plans séparés l'un de l'autre par un petit intervalle occupé par le séparateur 12 qui est une couche substantiellement mince et plate.

En référence avec les FIGs.1B, 1C, les films formant les électrodes 16, 18 comprennent des excroissances, respectivement 26, 28 pour former des zones de contact appelées pattes de contact électrique disposées décalées l'une vis-à-vis de l'autre. Ces pattes de contact 26, 28 sont de préférence respectivement connectées, par soudure ou toute autre méthode, à des languettes conductrices 36, 38.

En référence avec la FIG.2, dans un exemple de réalisation préférentiel, la cellule électrochimique 100 est du type plomb-acide sous forme de couches minces pour former une cellule élémentaire mince et plate.

Des produits pour fabriquer des éléments accumulateurs sont bien connus de l'homme du métier par la publication de connaissances générales : "Handbook of Batteries, 2nd Edition, David Lindon". Par ce document l'homme du métier sait bien que les batterie plomb-acide possèdent de grandes qualités de puissance et de rechargeabilité, c'est-à-dire que ce type de batterie est rechargeable et que la charge est stable pendant une durée de temps convenable.

En référence avec la FIG.2, une cellule électrochimique du type plomb-acide susceptible de réaliser un élément accumulateur plat comprend : des films 16, 18 ultra-minces d'un métal actif électrochimiquement, de préférence du plomb ; un revêtement desdits films de métal actif sur une face ou sur deux faces avec une pâte électrochimiquement active 20, 22 ; un matériau séparateur 12 agissant pour absorber un électrolyte qui peut être contenu dans un système scellé décrit ultérieurement, formant ledit élément accumulateur plat, qui enclôt la cellule électrochimique.

L'association des films de métal actif 16, 18 avec respectivement le revêtement de pâte active 20, 22 forme des plaques de polarité négative ou positive qui sont séparées l'une de l'autre par le matériau séparateur 12.

Une excroissance, respectivement 26 et 28, des films 16, 18 n'est pas revêtue de pâte active 20, 22 de manière à permettre de réaliser des pattes de contacts électriques. Le séparateur 12 s'étend au-delà des parties revêtues de pâte de chacune des plaques positives et négatives. Les plaques positives et négatives sont disposées de telle sorte que les parties non revêtues pour former des pattes de contacts ne sont pas en vis-à-vis, ou sont alternés.

Sur la FIG.2A, une plaque négative est formée d'une couche métallique 18, d'une zone de contact 28 et est revêtue de pâte 22 sur une seule face. Cette première électrode négative est séparée d'une électrode positive par le séparateur 12. L'électrode positive comprend un film mince métallique 16, une zone de contact 26 et est revêtue sur ses deux faces de pâte 20. Cette électrode positive 16, ayant une zone de contact 26, est séparée de l'électrode négative suivante par un séparateur 12. L'électrode négative suivante est constituée d'un film métallique 18, ayant une zone de contact 28, et d'une pâte 22 tournée vers le séparateur 12. Une telle cellule 100 comprend donc deux plaques négatives et une plaque positive commune formant ainsi deux cellules élémentaires disposées substantiellement parallèlement et ayant une électrode commune.

Dans une cellule plomb-acide 100, les films 16, 18 sont de préférence composés de plomb pur à 99,99 %. Pour une cellule électrochimique plomb-acide, il existe un grand nombre de compositions de pâtes actives possibles déjà connues de l'état de la technique. Par exemple, des pâtes au PbO et Pb₃O₄ peuvent être utilisées pour les plaques positives 16, et des pâtes au PbO peuvent être utilisées pour des plaques négatives 18. Le séparateur 12 peut être en fibres de verre très absorbantes. L'électrolyte peut être de l'acide sulfurique. La concentration en électrolyte dans la cellule est établie en ajoutant de l'électrolyte en excès dans le système scellé. Un système d'évent doit être prévu dans le système scellé pour éliminer les gaz en excès quand la pression interne excède un certain niveau. Dans le système scellé contenant la cellule électrochimique plomb-acide, l'électrolyte est dans un état pratiquement saturé et une certaine pression interne supérieure à la pression atmosphérique doit être maintenue pour que la cellule se trouve dans l'état opérationnel normal. Une cellule électrochimique du type représenté sur la FIG.2 est maintenue dans le système scellé de telle manière que le volume compris entre le séparateur compressé et le matériau actif est substantiellement rempli et qu'il n'y a pas d'électrolyte libre présent.

Ces cellules électrochimiques présentent l'avantage d'avoir des possibilités d'un nombre de cycles de charge et décharge très grand. Ces cellules peuvent être rechargées à un taux élevé comparé à d'autres cellules connues.

Dans des exemples de réalisation de cellules électrochimiques, les dimensions des zones actives des électrodes peuvent être environ de 44 mm sur 57 mm ; l'épaisseur de la plaque positive à deux couches peut être de 0,254 mm ; l'épaisseur des plaques négatives ou positives à une couche peut être de 0,152 mm ; l'épaisseur du séparateur comprimé sous 55gr par m² peut être de 0,191 mm. Ceci conduit à une cellule 100 d'épaisseur environ 1 mm. Cette cellule plomb-acide est capable de fournir une tension de 2V. A cet effet, les électrodes de même polarité sont réunies entre elles.

Les FIGS.3 et 4 représentent un élément accumulateur plat 1 pour former un système scellé pour une cellule électrochimique à électrolyte acide telle qu'une cellule électrochimique plomb-acide 100.

Cet accumulateur plat 1 comprend une enveloppe d'enrobage 40 pour contenir la cellule électrochimique 100. Cette enveloppe d'enrobage est réalisée au moyen d'un film mince flexible en un matériau isolant électriquement, inerte et étanche aux constituants de ladite cellule et aux agents extérieurs. Cette enveloppe d'enrobage aussi appelée ballon ou poche, comprend des passages étanches pour les pattes de contact 26, 28 des électrodes 16, 18 et comprend aussi un passage étanche pour un évent 30, 31 décrit précédemment comme un élément essentiel de la cellule électrochimique 100 à électrolyte acide.

Cet évent peut être constitué d'une tubulure 30, munie d'une bouchon amovible 31, pouvant d'une part servir de soupape de sécurité lorsque la pression dans l'enceinte de l'enveloppe d'enrobage augmente au-delà d'une limite de sécurité, et pouvant d'autre part servir d'ouverture de remplissage pour l'électrolyte acide.

Le film mince flexible comprend, pour former cette enveloppe 40, une zone de fermeture étanche 42 à travers laquelle s'étendent les passages étanches pour les pattes de contact 26, 28 et le passage étanche pour l'évent 30, 31.

En référence avec la FIG.3A, vu du dessus, avant scellement, le film constituant l'enveloppe 40 est en une seule partie munie d'une pliure 41. Ce film forme ainsi de part et d'autre de la pliure 41 une partie inférieure d'enveloppe 40A sur laquelle est disposée la cellule électrochimique 100, et une partie supérieure d'enveloppe 40B, qui vient couvrir après pliure, la partie inférieure d'enveloppe 40A. La cellule électrochimique 100 est en sandwich entre les parties inférieure et supérieure d'enveloppe 40A, 40B qui sont scellées entre elles à leurs périphérie 42, autre que la pliure 41, dans ladite zone de fermeture étanche, pour former le système scellé.

Les languettes 36, 38 scellées aux zones de contacts 26, 28 respectivement peuvent être en un métal différent du métal des électrodes. Dans ce cas, le métal des languettes ne doit pas être en contact avec l'électrolyte acide ; pour éviter ce contact, les languettes 36, 38 sont scellées aux pattes de contact 26, 28 en dehors de la zone interne d'enveloppe contenant l'électrolyte liquide. De préférence la zone de scellement entre pattes de contact 26, 28 et languettes 36, 38 est prise en sandwich dans une zone de fermeture étanche 42A de l'enveloppe à travers laquelle s'étendent les pattes de contact 26, 28. A cet effet, cette zone de fermeture étanche 42A peut être plus étendue que les autres zones de fermeture étanches 42B, de manière à enrober complètement la zone de scellement entre pattes 26 et 28 et languettes 36, 38.

En référence avec les FIG.4B et 3C, en coupe transversale, l'élément accumulateur 1 comprend la cellule électrochimique 100, et les parties inférieure et supérieure de l'enveloppe 40A, 40B, pliée en 41 et scellée dans la zone 42 pour laisser un passage étanche à l'évent 30, 31 à travers la zone 42A tel que montré sur la FIG. 3B, et pour laisser un passage étanche aux pattes 26, 28 munies de languettes 36, 38 à travers la zone 42A, tel que montré sur la FIG.3C. Les parties inférieures et supérieures d'enveloppe 40A, 40B sont substantiellement parallèles au plan des électrodes 16, 18. Elles ne sont pas scellées à ces électrodes. Lorsque la cellule 100 est sous pression dans l'élément accumulateur 1, elles deviennent très proches de ces électrodes.

Toute disposition de l'évent et des contacts électriques autre que celle montrée sur les FIGs.3 est possible.

En référence avec la FIG.4A vue du dessus, le film constituant l'enveloppe est en deux parties. La cellule 100 est disposée comme décrit en référence avec les FIGs.3. La seule différence est que, dans cet exemple de réalisation, la zone de fermeture étanche 42 s'étend tout autour de la cellule, en 42A, 42B et 42C.

En référence avec les FIGs.4B et 4C, l'évent 30, 31 et les pattes de contact 26, 28 munies de languettes 36, 38 s'étendent de façon étanche à travers la zone de fermeture 42A. La pliure selon les FIGs. 3 est remplacée par la zone de fermeture étanche 42C.

A titre d'exemple non limitatif, le film mince flexible pour réaliser l'enveloppe 40 peut être un polymère ou copolymère d'éthylène, polyéthylène, un polypropylène. Le film mince flexible peut être en plastique thermosoudable, ou bien les zones de scellement étanche peuvent être scellées par un adhésif. A titre d'exemple non limitatif, le film mince flexible peut être en un matériau plastique multicouches du commerce.

Un élément accumulateur 1 ainsi réalisé présente l'avantage d'être à la fois étanche de par les propriétés de l'enveloppe 40, et ouvrable au moyen de l'évent 30, 31.

Pour obtenir un fonctionnement normal de la cellule 100 dans l'enveloppe 40, formant l'élément accumulateur 1, l'électrolyte doit être mis sous pression. A cet effet l'enveloppe 40 de l'élément accumulateur est soumise elle-même à des moyens de pression.

Ces moyens de pression sont constitués par les parois 70 ou 80, 82 d'un boitier constituant une carte mince 2.

En référence avec les FIGs. 5 et 6, cette carte mince 2 comprend une première feuille de recouvrement 70A et une seconde feuille de recouvrement 70B substantiellement parallèles respectivement aux parois inférieure et supérieure d'enveloppe 40 de l'élément accumulateur 1. Ces feuilles de recouvrement 70A, 70B sont arrangées pour créer une pression sur ces parois inférieure et supérieure d'enveloppe, de manière à appliquer la pression nécessaire sur l'électrolyte acide.

A cet effet, les feuilles de recouvrement comprennent une zone centrale pour recevoir l'élément accumulateur et une zone de scellement 72 à leur périphérie. Ce scellement n'est pas nécessairement étanche, puisque l'étanchéité de la cellule 100 est réalisée par l'enveloppe 40 de l'élément accumulateur 1.

En référence avec les FIGs. 5A et 6A, vue du dessus avant scellement, la carte mince 2 comprend une zone de passage pour l'évent 30, 31, et des zones de passage pour les languettes 36, 38 servant alors de contact électrique extérieur.

En référence avec les FIGs. 5B à 5D et avec les FIG.6B à 6D, en coupe transversale, l'élément accumulateur est pris en sandwich entre les première et seconde feuilles de recouvrement 70A, 70B et pressé. A cet effet, les feuilles de recouvrement 70A, 70B peuvent être réunies à leur périphérie par deux joints périphériques scellés l'un sur l'autre 72.1, 72.2 comme montré sur la FIG.5B, en coupe transversale selon une patte de contact munie de languette ; ou bien les feuilles de recouvrement peuvent être réunies par un adhésif ou un seul joint 72.

Les feuilles de recouvrement 70A, 70B peuvent être en un matériau isolant semi-rigide tel qu'un acrylonytrile-butadiène-styrène (ABS) ou un polychlorure de vinyle (PVC). Les joints adhésifs 72.1, 72.2, 72C peuvent être du type polysiloxane (silicone).

Les FIGs.5 correspondent à un élément accumulateur 1 à enveloppe du type plié, et les FIGs.6 correspondent à un élément accumulateur 1 à enveloppe pincée scellée tout autour. Les cartes minces 2 pour ces éléments accumulateurs 1 sont substantiellement les mêmes.

En référence avec la FIG.7A vue du dessus, et la FIG.7B en coupe transversale selon une languette 36, les languettes 36, 38 de l'élément accumulateur 1 peuvent être prolongées par des plots de contact 56, 58 respectivement. Les languettes 36, 38 sont recourbées de part et d'autre de l'enveloppe 40, au moyen de pliures 46, 48 respectivement, et s'étendent vers le centre des parties externes inférieure 40A et supérieure 40B de l'enveloppe 40. Les languettes 36, 38 peuvent être prolongées par des plots de contact 56, 58 qui sont de simples élargissements des languettes pour un meilleur contact.

Les plots de contact 56, 58 peuvent aussi être des couches conductrices disposées sur les parties inférieure 40A et supérieure 40B de l'enveloppe 40. Dans ce cas les languettes recourbées s'étendent jusqu'à ces plots 56, 58 pour établir le contact. Cet exemple de réalisation n'est pas illustré spécifiquement et se déduit de la FIG.7A vue du dessus et de la FIG.7B en coupe en considérant que dans les zones référencées 56, 58, il y a superposition des languettes 36, 38 et de plots 56, 58 déjà réalisés sur les parties 40A, 40B.

En référence avec les FIG.7C à 7E, la carte mince 2 comprend une coopération des moyens de pression exercés par les feuilles de recouvrement avec des moyens pour connecter les languettes ou les plots de contact avec des moyens de contact électrique externes, pour la charge et la décharge électrique de l'élément accumulateur 1.

En référence avec la FIG.7C, ces moyens de contact externes utilisant la pression pour faire contact sur les languettes ou les plots sont constitués par des pions 56, 50, 66 et 58, 52, 68 respectivement. Ces pions comprennent une couche 56, 58 directement en contact par pression avec les languettes ou les plots, et sont substantiellement disposés dans la partie centrale des feuilles de recouvrement 70A, 70B. Ces pions comprennent un pied 50, 52 qui traverse les couches de recouvrement 70A, 70B sans qu'il soit besoin d'étanchéité, et une couche de contact externe 76, 78. Sur la FIG.7C, à titre d'exemple, les feuilles de recouvrement 70A, 70B qui peuvent être en matériau isolant semi-rigide, maintiennent la pression sur les parois de l'élément accumulateur. Ces feuilles sont réunies par un joint 72 à leur périphérie. L'évent 30, 31, non représenté, peut traverser ce joint 72 pour sortir à l'extérieur à la périphérie de la carte 2.

En référence avec les FIG.7D et 7E, les feuilles de recouvrement sont maintenant référencées 80, 82 et sont en matériau conducteur. Elle font directement contact par pression sur les languettes recourbées ou sur les plots 56,58. Ces feuilles de recouvrement 80,82 servent ainsi respectivement de contacts externes pour la charge et la décharge de l'élément accumulateur 1. Elles sont réunies par un joint 72 ou des moyens adhésifs plus ou moins épais comme montré sur les FIG.7D et 7E, mais néanmoins d'épaisseurs adéquates pour réaliser une pression sur les parties 40A, 40B de l'élément accumulateur 1 aussi appelées parois 40A, 40B, tout en réalisant un excellent contact électrique avec les languettes ou les plots 56,58 respectivement.

Le scellement des matériaux plastiques les uns sur les autres ou sur les métaux est bien connu de l'homme du métier par la publication de connaissances générales : "Plastic Engineering Hand Book, Society of Plastics Industry Incorporated, third Edition, Reinhold Book Corporation, New-York, USA".

Les feuilles de recouvrement en plastique peuvent être extrudés en un film qui peut être ensuite laminé. Les feuilles de recouvrement métalliques sont disponibles en diverses épaisseurs sous forme de ruban plat et peuvent être découpées de la même manière que les films plastiques. Les parties du joint 72 peuvent être un ruban de type silicone, ou bien peuvent être perforées à partir d'une feuille de film plastique avec une étampe dont la forme dépend de la forme désirée pour l'élément accumulateur. D'une manière générale, l'épaisseur du joint dépend de l'épaisseur de l'élément accumulateur disposé dans l'évidement formé par le joint.

Certains plastiques possèdent la propriété d'être scellables à chaud à des surfaces métalliques sans utiliser d'adhésif ou sans nécessiter de traitement préliminaire autre qu'un nettoyage. Dans certains cas, un prétraitement du métal est nécessaire. Certains matériaux isolants pour réaliser le joint 72 nécessitent un adhésif pour sceller le plastique sur le métal. Parmi les adhésifs pour sceller les plastiques entre eux ou au métal, des résines époxy ou des colles acryliques sont disponibles.

Dans une mise en oeuvre différente, qui peut être avantageuse pour régler la pression sur l'élément semi-conducteur, l'une des feuilles de recouvrement de la carte mince 2 peut être amovible. Dans ce cas elle est seulement fixée à un joint 72 par des moyens mécaniques de fixation, tels que des petites vis par exemple. Elle peut être aussi fixée à l'autre feuille de recouvrement à travers un joint par de tels moyens mécaniques.

En référence avec la FIG.8A, deux éléments accumulateurs référencés 1A, 1B, tels que décrits précédemment, sont montés en série pour fournir une tension plus élevée. Dans une variante non représentée, ces éléments peuvent être montés en parallèle pour fournir une capacité plus élevée. Pour le montage en série, ou en parallèle, de préférence deux éléments accumulateurs tels que décrits en référence avec la FIG.7B, qui peuvent être à enveloppe pliée ou bien à enveloppe pincée, sont posés l'un sur l'autre avec des plots ou languettes de polarités différentes en contact pour le montage en série ; ou avec des plots ou languettes de même polarité en contact pour le montage en parallèle. Par exemple, pour un montage en série, le plot 58A de l'élément accumulateur 1A est en contact avec le plot 56B de l'élément accumulateur 1B.

Comme décrit précédemment, ces éléments 1A, 1B doivent aussi subir une pression exercée sur les parois 40A, 40B des poches.

A cet effet, en référence avec la FIG.8B, deux éléments accumulateurs couplés 1A, 1B peuvent être montés dans une carte mince d'un des types décrit précédemment. Pour la mise en oeuvre du couplage d'éléments accumulateurs 1A, 1B conformes à la FIG.7B. la carte mince est de préférence telle que décrite en référence avec la FIG.7E, c'est-à-dire comprend des première et seconde feuilles de recouvrement 80A, 82B en matériau conducteur réunies à leur périphérie par un joint ou un adhésif 72 qui laisse passer les évents correspondant à chacun des éléments accumulateurs 1A, 1B.

Dans une autre mise en oeuvre chacun des éléments accumulateur 1A, 1B est placé dans une carte mince individuellé 2A, 2B et les moyens de contacts externes de ces cartes sont raccordés en série ou en parallèle. En référence avec la FIG.8C, de préférence, les cartes minces 2A, 2B sont du type décrit en référence avec la FIG.7D et sont positionnées avec leurs feuilles de recouvrement de polarités appropriées placées en contact. Les cartes minces peuvent être simplement mises en contact, ou bien fixées l'une à l'autre. Les contacts externes pour la charge et la décharge se font dans cet exemple de la FIG.8C par les feuilles de recouvrement externes 80A, 82B.

## Revendications

1. Elément accumulateur (1) plat comprenant :
une cellule élémentaire électrochimique (100) incluant des électrodes planes (16,18) de polarités opposées munies respectivement de zones de contact (26,28) et un électrolyte,
une enveloppe (40) pour contenir la cellule électrochimique (100), formée d'un film mince flexible en un matériau isolant électriquement, inerte et étanche aux constituants de la cellule électrochimique et aux agents extérieurs, qui a des parois substantiellement planes (40A,40B) et des zones de fermeture étanche périphériques (41,42) avec des passages étanches pour lesdites zones de contact (26,28),
des moyens de contact électrique d'entrée/sortie,
et des moyens de pression externes appliqués sur l'enveloppe (40) pour maintenir l'électrolyte à une pression spécifique dans la cellule électrochimique (100), élément accumulateur dans lequel :
les moyens de contact électrique d'entrée/sortie sont appliqués sur des languettes métalliques (36,38) respectivement connectées aux zones de contact (26,28) des électrodes (16,18) à l'intérieur d'une zone de fermeture étanche (42A) de l'enveloppe (40), de manière à éviter un contact du matériau des languettes et de l'électrolyte, et à éviter que les zones de contact d'électrodes s'étendent à l'extérieur de l'enveloppe.

2. Elément accumulateur selon la revendication 1, dans lequel :
les languettes métallique (36,38) qui sont connectées par une de leurs extrémités aux zones de contact (26,28) des électrodes (16,18), et ont leurs autres extrémités recourbées et dirigées vers les centres des parois planes (40A,40B) à l'extérieur de l'enveloppe (40), et pressées contre lesdites parois planes externes par lesdits moyens de pression externes (50,52 ;80,82) qui constituent aussi lesdits moyens de connexion électrique d'entrée/sortie de l'élément accumulateur.

3. Elément accumulateur selon la revendication 2, dans lequel les extrémités des languettes métalliques (36,38) sont en forme de plots de contact (56,58), ou bien sont connectées à des plots de contact (56,58) réalisés dans une couche métallique, ces plots de contact étant disposés substantiellement au centre des parois planes à l'extérieur de l'enveloppe.

4. Elément accumulateur selon l'une des revendications 1 à 3, dans lequel l'enveloppe (40) comprend aussi, dans une zone de fermeture étanche périphérique (42A), un passage étanche pour un évent (30,31).

5. Elément accumulateur selon l'une des revendications 1 à 4, dans lequel le film constituant l'enveloppe est en une partie munie d'une pliure (41) pour former une paroi inférieure d'enveloppe (40A) et une paroi supérieure d'enveloppe (40B) entre lesquelles la cellule élémentaire électrochimique (100) est en sandwich et les parois supérieure et inférieure d'enveloppe sont scellées entre elles à leur périphérie autre que la pliure (41), formant ladite zone de fermeture étanche (42) de ladite cellule (100).

6. Elément accumulateur selon l'une des revendications 1 à 4, dans lequel le film constituant l'enveloppe (40) est en deux parties formant une paroi inférieure d'enveloppe (40A) et une paroi supérieure d'enveloppe (40B) entre lesquelles la cellule élémentaire électrochimique (100) est en sandwich, et les parois inférieure et supérieure d'enveloppe sont scellées entre elles de manière périphérique formant ladite zone de fermeture étanche (42) de ladite cellule (100).

7. Assemblage d'éléments accumulateurs plats (1A,1B) réalisés selon l'une des revendications 1 à 6, formé en superposant lesdits accumulateurs plats, avec leurs poches superposées, et leurs languettes connectées en série ou en parallèle.

8. Assemblage selon la revendication 7 d'éléments accumulateurs plats réalisés avec au moins les caractéristiques de la revendication 2, formé en superposant lesdits accumulateurs plats, avec leurs poches superposées de manière telle que les extrémités des languettes recourbées ou les plots de contact disposés substantiellement aux centres des parois planes adjacentes sont en contact électrique pour un montage électrique en série ou en parallèle, et que les extrémités des languettes (36,38) recourbées ou les plots de contact disposés substantiellement aux centres des parois planes tournées vers l'extérieur du montage sont pressées par lesdits moyens de pression externes (50,52 ; 80,82) qui constituent aussi lesdits moyens de connexion électrique d'entrée/sortie de l'assemblage.

9. Carte mince comprenant au moins un élément accumulateur plat (1) réalisé selon l'une des revendications 1 à 6, et comprenant en outre deux feuilles de matériau semi-rigide, appelée feuilles de recouvrement (70A, 70B ; 80, 82) disposées substantiellement parallèlement de part et d'autre de l'élément accumulateur (1), maintenues à leur périphérie par une zone de raccordement (72.1, 72.2 ; 72) avec si nécessaire une zone de passage pour l'évent (30,31), et munies d'un arrangement pour fournir lesdits moyens de contact électrique d'entrée/sortie et d'un arrangement pour fournir les moyens de pression sur les parois planes externes (40A, 40B) de l'enveloppe.

10. Carte mince selon la revendication 8, comprenant au moins un élément accumulateur plat (1) réalisé avec les caractéristiques de la revendication 2, dans laquelle l'arrangement appliqués aux feuilles de recouvrement (70A, 70B ; 80, 82) est fait pour constituer à la fois des moyens de contact électrique d'entrée/sortie et des moyens de pression, et comprend à cet effet des pions de contact (76,78) qui s'étendent de la partie interne de la carte vers la partie externe de la carte à travers lesdites feuilles de recouvrement et sont en contact électrique respectivement avec les extrémités (36,38) des dites languettes recourbées ou avec lesdits plots de contact (56, 58) par le moyen de la pression exercée par les feuilles de recouvrement sur l'enveloppe.

11. Carte mince selon la revendication 10, dans laquelle les feuilles de recouvrement (70A, 70B) sont en matériau isolant et sont scellées à leur périphérie par un joint ou un adhésif (72.1, 72.2, 72 ; 72) en matériau isolant.

12. Carte mince selon la revendication 9, comprenant au moins un élément accumulateur plat (1) réalisé selon les caractéristiques de la revendication 2, dans laquelle l'arrangement appliqué aux feuilles de recouvrement (70A, 70B ; 80, 82) est fait pour fournir à la fois des moyens de contact électrique d'entrée/sortie et des moyens de pression, et comprend à cet effet la constitution des dites feuilles de recouvrement en un matériau conducteur (70A,70B) qui est mis en contact électrique respectivement avec les extrémités des dites languettes recourbées (36,38) ou avec lesdits plots de contact (56,58) par le moyen de la pression exercée par lesdites feuilles de recouvrement sur l'enveloppe.

13. Carte mince selon la revendication 12, dans laquelle les feuilles de recouvrement (80, 82) sont en matériau conducteur et sont scellées à leur périphérie par un joint ou un adhésif (72.1, 72.2, 72 ; 72) en matériau isolant.

14. Carte mince selon l'une des revendications 8 à 13, dont une feuille de recouvrement est amovible.

15. Carte mince selon l'une des revendications 10 à 13, comprenant un assemblage de plusieurs éléments accumulateurs (1A, 1B) selon la revendication 8.

16. Système de cartes minces, comprenant l'association en série ou en parallèle de plusieurs cartes minces selon l'une des revendications 8 à 15.
